# EUROPEAN PATENT APPLICATION

(11) **EP 2 998 354 A1**
(43) Date of publication of application: **23.03.2016**
(21) Application number: 14798410.8
(22) Date of filing: 02.05.2014
(51) Int. Cl.: C08L 27/18, C08K 3/04, C08K 7/06, F16J 15/32

(54) **PTFE RESIN COMPOSITION**

(30) Priority: 13.05.2013 JP 2013100856
(71) Applicant: Eagle Industry Co., Ltd., Minato-ku Tokyo 105-8587 (JP)
(72) Inventor: MATSUMOTO Takanobu, Tokyo 105-8587 (JP)
(74) Representative: Adam, Holger
(86) International application number: PCT/JP2014/062151
(87) International publication number: WO 2014/185291

(57) **Abstract**

Disclosed is a PTFE resin composition comprising 70 to 90 wt.% of polytetrafluoroethylene or modified polytetrafluoroethylene, and 30 to 10 wt.% of curved carbon fibers. The PTFE resin composition, which is prepared by blending a specific amount of curved carbon fibers with PTFE or modified PTFE, can be effectively used as a molding material that can provide a water pump lip seal material having excellent deformation resistance, abrasion resistance, and sealing properties against cooling water. In particular, even when this composition is used as a vehicle cooling water circulating pump seal, the falling of the carbon fibers can be effectively prevented even under severe conditions, i.e., cooling water seal, and the leakage of cooling water caused by deformation and abrasion during use does not occur; thus, the sealing properties thereof can be sufficiently satisfied.

## Description

### TECHNICAL FIELD

The present invention relates to a PTFE resin composition. More particularly, the present invention relates to a PTFE resin composition that is effectively used, for example, as a molding material for water pump lip seal.

### BACKGROUND ART

Shaft seal materials are used as sealing members in sliding parts of vehicle engines and transmissions, air-conditioning systems (e.g., air conditioners), refrigerators, etc. Such shaft seal materials are required to reduce the leakage of the sealed fluid and to have excellent deformation resistance and abrasion resistance even in a severe environment with a high PV value (PV value: maximum planar pressure P x maximum peripheral velocity V). In addition, they are required to have low friction (low sliding heat generation) so as to reduce loss of driving force and relieve heat damage to a seal system.

Conventionally, as sliding materials for such applications, PTFE composites comprising, as a main starting material, polytetrafluoroethylene [PTFE] having excellent heat resistance, chemical resistance, sliding characteristics, and manufacturing cost, as well as, as a filler, carbon powder, carbon fibers, etc. so as to improve deformation properties and abrasion properties, which are not satisfied by PTFE alone are proposed.

For example, Patent Document 1 discloses a PTFE resin composition comprising 40 to 94 wt.% of PTFE, 3 to 57 wt.% of graphite, and 3 to 30 wt.% of carbon fibers, with the aim to provide a PTFE composition in which graphite is added as a filler to PTFE, and which provides, when produced by sintering, a sliding material, particularly one for use under high pressure, having no directionality of pressure resistance while suppressing the increase in friction coefficient.

Moreover, Patent Document 2 describes a PTFE resin composition comprising 78 to 60 wt.% of PTFE and 22 to 40 wt.% of carbon fibers. Patent Document 2 indicates that by merely blending a specific amount of carbon fibers with PTFE, the PTFE resin composition can be effectively used as an oil seal lip material having excellent deformation resistance, sealing properties, and abrasion resistant characteristics.

However, when such a PTFE resin composition is used as a lip material of a vehicle cooling water circulating pump seal, the sealed liquid is not oil with superior lubricity, but is cooling water with inferior lubricity (long life coolant [LLC] comprising an ethylene glycol aqueous solution as a main component); therefore, the removal of the carbon fibers caused by the softening of the lip material due to sliding heat generation cannot be prevented. For this reason, all of the deformation resistance (pressure resistance), abrasion resistance, and sealing properties during the use of the sealing material cannot be satisfied.

### PRIOR ART DOCUMENT

### PATENT DOCUMENT

Patent Document 1 : JP-A-2001-294720
Patent Document 2 : JP-A-2006-176544

### OUTLINE OF THE INVENTION

### PROBLEM TO BE SOLVED BY THE INVENTION

An object of the present invention is to provide a PTFE resin composition that can be effectively used as a molding material for a water pump lip seal having excellent deformation resistance, abrasion resistance, and sealing properties against cooling water.

### MEANS FOR SOLVING THE PROBLEM

The above object of the present invention can be achieved by a PTFE resin composition comprising 70 to 90 wt.% of polytetrafluoroethylene or modified polytetrafluoroethylene, and 30 to 10 wt.% of curved carbon fibers.

### EFFECT OF THE INVENTION

The PTFE resin composition of the present invention is obtained by blending a specific amount of curved carbon fibers with PTFE or modified PTFE, and thereby can be effectively used as a molding material that can give a water pump lip seal having excellent deformation resistance, abrasion resistance, and sealing properties against cooling water, particularly a shaft seal material for vehicle cooling water circulating pumps.

That is, even when a lip seal molded from the PTFE resin composition of the present invention is used as a vehicle cooling water circulating pump seal, the falling of the carbon fibers can be effectively prevented even under severe sealing conditions, i.e., cooling water seal, and the leakage of cooling water caused by deformation and abrasion during use does not occur; thus, the sealing properties thereof can be sufficiently satisfied.

### BRIEF DESCRIPTION OF DRAWINGS

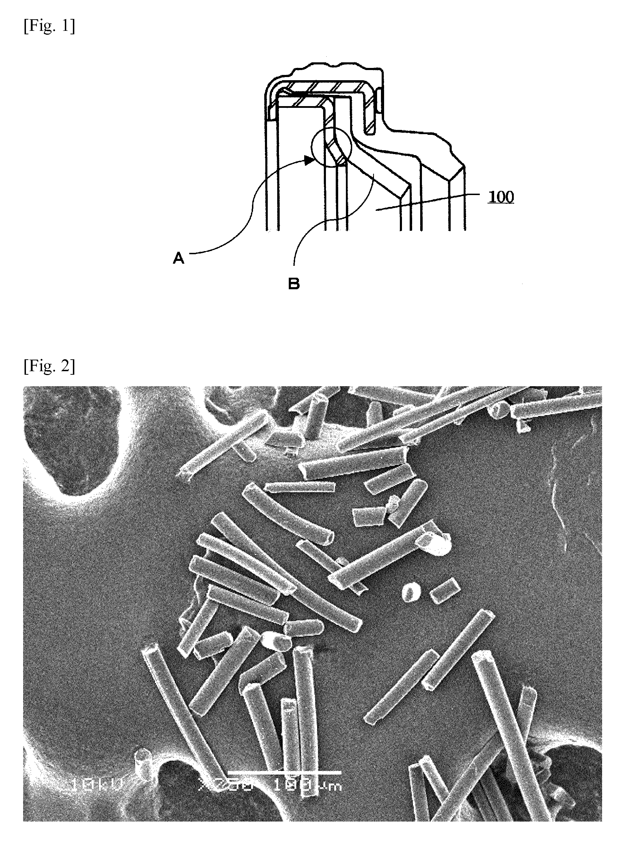

Fig. 1: A main part cross-sectional view of a lip seal
Fig. 2: An electron micrograph of curved carbon fibers

### EMBODIMENTS FOR CARRYING OUT THE INVENTION

As modified PTFE to be used as with PTFE, PTFE copolymerized with 2 wt.% or less of perfluoroalkylvinyl having a C₁-C₃ perfluoroalkyl group, preferably perfluoromethylvinylether, hexafluoropropylene, ethylene, or the like is used. The same molding method as that for PTFE is applied to such modified PTFE.

PTFE or modified PTFE is blended with specific carbon fibers to be used. Examples of carbon fibers include pitch-based carbon fibers, preferably highly-graphitized, pitch-based carbon fibers, having an average fiber diameter of about 5 to 20 µm and an average fiber length of about 70 to 200 µm, and preferably having a curved shape with a curvature radius of about 50 to 1,500 µm, rather than a straight shape. Not all of the carbon fibers are required to have such properties; the object of the present invention can be achieved preferably when about 10% or more of the total number of the carbon fibers have such properties. Practically, commercially available carbon fibers having such properties are used.

When carbon fibers having a curvature radius of less than about 50 µm are used, the carbon fibers break in the process of compression molding of PTFE materials, and an appropriate fiber length cannot be maintained. In contrast, when carbon fibers having a curvature radius of greater than about 1,500 µm are used, the carbon fibers are insufficiently entangled with PTFE, and the falling of the carbon fibers cannot be sufficiently prevented. The curvature radius was determined by measuring a secondary electron image taken by an electron microscope, using image-analysis software.

Specific carbon fibers having such properties are less likely to be fallen even when the lip material is softened by sliding heat generation to reduce the carbon fiber-holding power, because the curved portions of the fibers are entangled with PTFE. The carbon fibers having a specific shape are used at a ratio of about 10 to 30 wt.%, in the total amount of the carbon fibers and PTFE. When the blending ratio of the carbon fibers is less than this range, the effect of abrasion resistance becomes very low. In contrast, when the blending ratio is greater than this range, molding defects, seal cracks, seal breaks, etc., occur, thereby reducing sealing properties.

Moreover, when PAN-based carbon fibers or pitch-based, straight-formed carbon fibers, both of which are widely used for structural material applications, are used as the carbon fibers, deformation resistance, abrasion resistance, sealing properties, etc., cannot be satisfied.

Any blending method can be used to blend carbon fibers with PTFE, as long as the carbon fibers can be well dispersed. Generally, the blending is carried out using a mixer, such as a Henschel mixer, to form a PTFE composition.

The production of a lip seal is performed by supplying a PTFE composition comprising the above components in a specific molding die; premolding the composition using a compression-molding material to hold the composition at a molding pressure of about 30 to 100 MPa, preferably about 70 to 80 MPa, for about 60 to 150 seconds; sintering the premolded product at a temperature equal to or higher than the melting point (327°C) of PTFE or a temperature equal to or higher than the melting point (lower than 327°C) of modified PTFE, generally at about 350 to 390°C, for about 1 to 6 hours; and cutting the sintered product into a desired shape.

The carbon fibers may not only have curvature, but also be twisted. In this case, the lip seal having more excellent sealing properties can be obtained. The term "twisted" as used herein means that when one point of a carbon fiber is compared to a surface of another point at a specific distance from the one point in the longitudinal direction of the fiber, the fiber is twisted to swirl (i.e., the fiber has a twisted angle). Alternatively, it means that the fiber is twisted.

### EXAMPLES

The following describes the present invention with reference to Examples.

### Example 1

90 parts (by weight; hereinafter the same) of modified PTFE (Teflon (registered trademark) 70-J, produced by Du Pont-Mitsui Fluorochemicals Co., Ltd.; modified PTFE) and 10 parts of pitch-based curved carbon fibers (average fiber diameter: 13 µm, average fiber length: 90 µm, and curvature radius: 517 µm) were mixed by the above-mentioned method. Then, the mixture was compression-molded at about 60 to 70 MPa using a press, etc., and sintered in a sintering furnace at 360 to 390°C for 3 hours.

Subsequently, a lip seal, as shown in the drawing, was produced by cutting, and seal operation was performed for 1,000 hours to perform a test for evaluating sealing properties. The product evaluation was conducted according to the following criteria.

### Deformation resistance:

The lip state after the test was visually observed and deformation in a part of the lip seal 100 on the inner diameter side bent on the sealed liquid side (waist part A) was evaluated as follows:
no deformation found: ○; and deformation found: ×
Abrasion resistance:

The abrasion loss of the lip sliding surface after the test was measured and evaluated as follows:
abrasion loss of less than 0.1 mm: ⊚; 0.1 to 0.2 mm: ○; 0.2 to 0.3 mm: Δ; and 0.3 mm or more: ×

### Sealing properties:

The total amount of cooling water leaked from the seal part was measured from the start of the test to the end of the test, and evaluated as follows:
leakage amount of less than 10 ml: ○; 10 to 20 ml: Δ; and 20 ml or more: ×

Presence of cracks on the lip tip part during assembling:
Visually determined

### Example 2

In Example 1, the amount of modified PTFE was changed to 70 parts, and the amount of pitch-based curved carbon fibers was changed to 30 parts.

### Example 3

In Example 1, the same amount of highly-graphitized, pitch-based curved carbon fibers (average fiber diameter: 13 µm, average fiber length: 90 µm, and curvature radius: 484 µm) was used in place of pitch-based curved carbon fibers.

### Example 4

In Example 2, the same amount of highly-graphitized, pitch-based curved carbon fibers (average fiber diameter: 13 µm, average fiber length: 90 µm, and curvature radius: 484 µm) was used in place of pitch-based curved carbon fibers.

### Example 5

In Example 1, the same amount of PTFE (Teflon (registered trademark) 7-J, produced by Du Pont-Mitsui Fluorochemicals Co., Ltd.) was used in place of modified PTFE.

### Example 6

In Example 2, the same amount of PTFE (Teflon (registered trademark) 7-J, produced by Du Pont-Mitsui Fluorochemicals Co., Ltd.) was used in place of modified PTFE.

### Comparative Example 1

In Example 1, the same amount of pitch-based, straight-formed carbon fibers (average fiber diameter: 15 µm, and average fiber length: 130 µm) was used in place of pitch-based curved carbon fibers.

### Comparative Example 2

In Example 1, the same amount of PAN-based carbon fibers (average fiber diameter: 9 µm, and average fiber length: 130 µm) was used in place of pitch-based curved carbon fibers.

### Comparative Example 3

In Example 1, the amount of modified PTFE was changed to 95 parts, and the amount of pitch-based, curved carbon fibers was changed to 5 parts.

### Comparative Example 4

In Example 1, the amount of modified PTFE was changed to 65 parts, and the amount of pitch-based curved carbon fibers was changed to 35 parts.

### Comparative Example 5

In Example 3, the amount of modified PTFE was changed to 95 parts, and the amount of highly-graphitized, pitch-based curved carbon fibers was changed to 5 parts.

### Comparative Example 6

In Example 3, the amount of modified PTFE was changed to 65 parts, and the amount of highly-graphitized, pitch-based curved carbon fibers was changed to 35 parts.

Table 1 (Examples) and Table 2 (Comparative Examples) below show the results obtained in the above Examples and Comparative Examples, together with their compositions.

**Table 1**

| Example | | | 1 | | 2 | | 3 | | 4 | | 5 | | 6 |
|---|---|---|---|---|---|---|---|---|---|---|---|---|---|
| [Composition] | | | | | | | | | | | | | |
| Modified PTFE | (part) | | 90 | | 70 | | 90 | | 70 | | - | | - |
| PTFE | (part) | | - | | - | | - | | - | | 90 | | 70 |
| Pitch-based CF | (part) | | 10 | | 30 | | - | | - | | 10 | | 30 |
| Highly-graphitized CF | (part) | | - | | - | | 10 | | 30 | | - | | - |
| [Evaluation] | | | | | | | | | | | | | |
| Deformation resistance | | | ○ | | ○ | | ○ | | ○ | | ○ | | ○ |
| Abrasion resistance | | | ○ | | ○ | | ⊚ | | ⊚ | | ○ | | ○ |
| Sealing properties | | | ○ | | ○ | | ⊚ | | ⊚ | | ○ | | ○ |
| Cracks during assembling | | | None | | None | | None | | None | | None | | None |

**Table 2**

| Comp. Example | | | 1 | | 2 | | 3 | | 4 | | 5 | | 6 |
|---|---|---|---|---|---|---|---|---|---|---|---|---|---|
| [Composition] | | | | | | | | | | | | | |
| Modified PTFE | (part) | | 70 | | 70 | | 95 | | 65 | | 95 | | 65 |
| Pitch-based CF | (part) | | - | | - | | 5 | | 35 | | - | | - |
| Straight-formed CF | (part) | | 30 | | - | | - | | - | | - | | - |
| PAN-based CF | (part) | | - | | 30 | | - | | - | | - | | - |
| Highly-graphitized CF | (part) | | - | | - | | - | | - | | 5 | | 35 |
| [Evaluation] | | | | | | | | | | | | | |
| Deformation resistance | | | × | | × | | × | | ○ | | × | | ○ |
| Abrasion resistance | | | Δ | | Δ | | × | | Δ | | × | | Δ |
| Sealing properties | | | Δ | | Δ | | Δ | | × | | Δ | | × |
| Cracks during assembling | | | None | | None | | None | | Cracks | | None | | None |

| | | | | | | | | | | | | | |
|---|---|---|---|---|---|---|---|---|---|---|---|---|---|
| Note) CF: carbon fibers | | | | | | | | | | | | | |

### REFERENCE SIGN LIST

100: Lip seal
A: Waist part of lip seal
B: Molded part of PTFE resin composition

## Claims

1. A PTFE resin composition comprising 70 to 90 wt.% of polytetrafluoroethylene or modified polytetrafluoroethylene, and 30 to 10 wt.% of curved carbon fibers.

2. The PTFE resin composition according to claim 1, wherein as the modified polytetrafluoroethylene, polytetrafluoroethylene copolymerized with 2 wt.% or less of perfluoroalkyl vinyl ether, hexafluoropropylene, or ethylene is used.

3. The PTFE resin composition according to claim 1 or 2, wherein the carbon fibers include 10% or more of pitch-based curved carbon fibers having a curvature radius of 50 to 1,500 µm in the total number of the carbon fibers.

4. The PTFE resin composition according to claim 1, which is used as a molding material for a water pump lip seal.

5. A water pump lip seal obtained from the PTFE resin composition according to claim 4.

6. The water pump lip seal according to claim 5, which is used as a shaft seal material for a vehicle cooling water circulating pump.
